# EUROPEAN PATENT SPECIFICATION

(11) **EP 2 980 344 B1**
(45) Date of publication and mention of the grant of the patent: **10.05.2017**
(21) Application number: 14785306.3
(22) Date of filing: 08.04.2014
(51) Int. Cl.: E05D 13/00, E05F 5/00, E05F 1/16, E05D 15/06

(54) **DOUBLE-PIPE DAMPING ANTI-BOUNCING UPPER WHEEL DEVICE**
OBERE RADVORRICHTUNG MIT PRELLSCHUTZ UND DOPPELROHRIGER DÄMPFUNG
DISPOSITIF DE ROUE SUPÉRIEURE ANTI-REBONDISSEMENT À AMORTISSEMENT À DOUBLE TUYAU

(30) Priority: 15.04.2013 CN 201320188516 U; 08.07.2013 CN 201320403640 U
(43) Date of publication of application: 03.02.2016
(73) Proprietor: Zhongshan Opike Hardware Product Co., Ltd, Zhongshan, Guangdong 528415 (CN)
(72) Inventor: XU, Jiangde, Zhongshan, Gunagdong 528415 (CN)
(74) Representative: Sun, Yiming
(86) International application number: PCT/CN2014/074903
(87) International publication number: WO 2014/169771

(56) References cited:
- EP-A2- 2 354 407
- CN-A- 101 538 978
- CN-U- 201 738 717
- CN-U- 201 738 717
- CN-U- 202 467 441
- CN-U- 202 467 441

## Description

### FIELD OF THE INVENTION

The present invention relates to the field of manufacture of hardware accessory for architectural decoration, especially relates to an upper wheel for a sliding door, and more especially relates to an anti-jumping upper wheel device with double dampers.

### BACKGROUND OF THE INVENTION

There are several kinds of damper assemblies used in cupboard doors (sliding doors), dampers in a general damper assembly for a sliding door are used in relative left and right sides and thus rigid assembly requirements is needed; and while usually the damper assembly has only one damper and thus has limited damping force. Under the aforementioned prior art, if you want to enhance damping force, you need to mount two dampers for a damper assembly in both left and right sides, correspondingly you thus need to mound a pulling sheet respectively for each damper in the track, and therefore a very complicated structure and more rigid assembly requirements are needed.

In order to overcome the abovementioned defects, applicant of the present invention researched an upper wheel assembly with double dampers for the cupboard door and have a patent (patent application No. CN2013265103U) on it, wherein two dampers in parallel are assembled in a cover of the upper wheel assembly with double dampers for cupboard door, and a pulling unit is assembled to a common fore-head of the two dampers which can pull or push both dampers simultaneously with cooperation of other units, to strung or obtain damping effect. For assembling, fixing the upper wheel assembly with double dampers on upper end of the door leaf, and fixing an upper widget (i.e. a pulling unit) upside-down in the upper track by screw, and plugging a sliding pillar of the upper widget into a circular arc groove of a damper sliding sheet of the upper wheel assembly with double dampers, in order to pull and push the damper sliding sheet.

However, with applying of the above-mentioned patented technology, the applicant found a problem to be solved that the door leafjumpings at the time of being open and closed because of accelerated velocity. In addition, problem of assembly of the upper widget also needs to be solved, because assembly of the upper widget into the upper track is not firm enough that the upper widget is prone to drop when the door is pulled and pushed for much times. Moreover, the pulling pillar should be long enough to plug into the circular arc groove of the damper sliding sheet, while in fact it is not long enough as it is fixed on a base of the upper widget which is assembled in the upper track, and it thus is prone to fall off the circular arc groove, and therefore the problem about the effective length of the pulling pillar of the upper widget needs to be solved.

For the above, it is necessary to improve the above-mentioned technology.

### SUMMARY OF THE INVENTION

In order to solve the problem of door leaf jumpinging in the prior art, the patent filed on 15th April, 2013 by the applicant named "anti-jumping upper wheel assembly with double dampers for cupboard door" (patent application No. CN20132188516U) provides a technical solution:
mounting an anti-jumping roller vertically in the cover of the upper wheel assembly with double dampers for cupboard door, and the patent also provides a double-plate pulling unit to solve the problem about assembly of the upper widget and effective length of the pulling pillar, but with applying defects also exit. For this purpose, the applicant further researched and got an improved double-plate pulling unit on which a patent application on 8^{th} July, 2013 (Patent application No. CN20132403640U) is filed, which can adjust height of the pulling pillar and thus ensure effective length of the pulling pillar, and make assembly easier and firmer.

The present invention claims right of priority of the above-mentioned two patents, whose technical solution will be cited into the present application.

The present invention aims to provide an anti-jumping upper wheel assembly with double dampers, which can anti jumpinging of the door leaf, and whose upper widget is easy to be assembled and is firm, and whose upper widget cooperates well with the damper sliding unit.

In order to achieve the above aim, the present invention provides the following technical solution according to claim 1:
An anti-jumping upper wheel device with double dampers comprising an anti-jumping upper wheel assembly with double dampers which is comprised of an upper wheel plate, a upper wheel and an upper wheel cover mounted on said upper wheel plate, dampers connected to a damper sliding unit at an end being mounted on longitudinal direction in said upper wheel cover on said upper wheel plate, and a pulling unit which can be assembled into an upper track that a door leaf is assembled in and can pull said damper sliding unit, wherein,
an anti-jumping roller is mounted to said upper wheel cover, which has a fixed horizontal axle being vertical with the direction that the door leaf moves and upper part of which protruding out of top face of said upper wheel cover;
said pulling unit is a pulling unit with double plates, which is comprised of a baseplate of pulling unit and a pillar plate of pulling unit mounted above it; a pulling pillar which can pull said damper sliding unit is fixed vertically on said pillar plate of pulling unit;
each of both ends on longitudinal direction of said baseplate of pulling unit is cut into a plurality of longitudinal branch plates in parallel each of which has a connecting hole, and a connecting elastic unit is connected in parallel to said a plurality of longitudinal branch plates in parallel at each end on longitudinal direction of said baseplate of pulling unit;
said connecting elastic unit is comprised of a baseplate of elastic unit, a left erect plate and a right erect plate which are respectively fixed on both ends of said baseplate of elastic unit, said baseplate of elastic unit having a plurality of sub-plates which are same in quantity with said branch plates at corresponding ends of said baseplate of pulling unit, and at least one sub-plate is raised or dent with relative to other sub-plates so that all said sub-plates are not in the same plane in order to achieve overlapping connection by some sub-plates fitting in top face of corresponding branch plates and other sub-plates fitting in bottom face of corresponding branch plates ;
said a plurality of sub-plates respectively fitting to said a plurality of longitudinal branch plates in parallel so that said connecting elastic unit can be connected to said baseplate of pulling unit; said sub-plates have assembly holes or raised heads fitting to said connecting holes of said branch plates;
lug bosses are respectively mounted on outer surfaces of said left erect plate and said right erect plate, and vertical distance between outer surface of said lug bosses of said left erect plate and outer surface of said right erect plate is identical with vertical width of said upper track.

Preferably, each of both ends on longitudinal direction of said baseplate of pulling unit is cut into three longitudinal branch plates in parallel, and said baseplate of elastic unit of said connecting elastic unit is comprised of three sub-plates which are a left baseplate fixed to said left erect plate, a right baseplate fixed to said right erect plate and a middle baseplate fixed between said left baseplate and said right baseplate.

Preferably, said left baseplate is in the same plane with said right baseplate, said middle baseplate is raised with respect to said left baseplate and said right baseplate in order that said branch plate in the middle can fit to bottom of said middle baseplate and said branch plate at both sides can respectively fit to top of said left baseplate and said right baseplate.

Preferably, two raised heads are respectively mounted on said left baseplate and said right baseplate, said raised heads respectively fit to and connect to said connecting holes in two of said three longitudinal perpendicular branch plates at sides, an assembly hole is mounted to said middle baseplate to fit to said connecting hole in one of said three longitudinal perpendicular branch plates in the middle, and a screw goes through said assembly hole and said connecting hole to assemble.

Preferably, a vertically upright guiding unit and an internal six angle stud in parallel therewith are fixed on said baseplate of pulling unit, a guiding hole fitting to said guiding unit and a screw hole fitting to said internal six angle stud are correspondingly mounted to said pillar plate of pulling unit, said guiding unit and said internal six angle stud go through said guiding hole and said screw hole respectively, and distance between said pillar plate of pulling unit and said baseplate of pulling unit can be adjusted by rotating said internal six angle stud.

Preferably, said lug boss is in cuboid.

Preferably, a "+"symbol-shaped groove hole is mounted to said upper wheel cover at the end to which a groove for sliding is mounted, and said anti-jumping roller is assembled in said "+"symbol shaped groove hole.

Preferably, two dampers are mounted in parallel on longitudinal direction in said upper wheel cover on said upper wheel plate, and heads of drawbars of said two dampers are connected to said damper sliding unit; said damper sliding unit has a plugging hole fitting to said pulling unit, a groove for sliding corresponding to said damper sliding unit is mounted to said upper wheel cover, said plugging hole is positioned in said groove for sliding, and said pulling unit can go through said groove for sliding and plug into said plugging hole.

Preferably, an extension spring is mounted in parallel with and between said two dampers, a connecting unit is connected to said damper sliding unit, and said heads of drawbars of said dampers and the corresponding head of said extension spring are connected to said connecting unit.

Preferably, said damper sliding unit has a fitting pillar, a guiding groove used for guiding said fitting pillar is mounted to inner surface of said upper wheel cover, said guiding groove has a bent portion at an end, and said bent portion and said damper sliding unit are proper structured in order that said fitting pillar can fit to said bent portion as sliding into said bent portion and can get out as sliding to opposite direction.

The present invention has the following advantages: special structured pulling unit with double plates is easy to be assembled in the upper track and very firm, in order that the pulling unit can function well and pull the damper sliding unit to move, and wherein the anti-jumping roller can prevent the door leaf from jumpinging at the time of being open and closed, to ensure the door leaf move smoothly, and the anti-jumping upper wheel device with double dampers is simple and compact in structure and is with low cost. Other advantages of the present invention will be described in the following preferred examples.

### BRIEF DESCRIPTION OF THE DRAWINGS

Figure 1 is a front view of an embodiment of the anti-jumping upper wheel assembly with double dampers.
Figure 2 is a top view of the anti-jumping upper wheel assembly with double dampers in Figure 1.
Figure 3 is a left view of the anti-jumping upper wheel assembly with double dampers in Figure 1.
Figure 4 is a right view of the anti-jumping upper wheel assembly with double dampers in Figure 1.
Figure 5 is a graphic model of the anti-jumping upper wheel assembly with double dampers in Figure 1.
Figure 6 is a graphic model of the anti-jumping upper wheel assembly with double dampers in Figure 1 without the upper wheel plate, wherein its extension spring and dampers are in non tension state, and wherein an exploded view of position of the upper wheel is shown.
Figure 7 is a diagrammatic sketch of the upper wheel cover of the anti-jumping upper wheel assembly with double dampers in Figure 1.
Figure 8 is a front view of the pulling unit of the anti-jumping upper wheel device with double dampers, wherein the pulling unit is shown upside down.
Figure 9 is a top view of the pulling unit in Figure 8.
Figure 10 is an upward view of the pulling unit in Figure 8.
Figure 11 is a right view of the pulling unit in Figure 8.
Figure 12 is a left view of the pulling unit in Figure 8.
Figure 13 is a graphic model of the pulling unit in Figure 8.
Figure 14 is a front view of the connecting elastic unit of the pulling unit in Figure 8.
Figure 15 is a top view of the connecting elastic unit in figure 14.
Figure 16 is an upward view of the connecting elastic unit in figure 14.
Figures 17 and 18 are respectively a left view and a right view of the connecting elastic unit in figure 14.
Figure 19 is a graphic model of the connecting elastic unit in figure 14.
Figure 20 is a whole view of an embodiment of the anti-jumping upper wheel device with double dampers of the present invention, wherein the anti-jumping upper wheel assembly with double dampers is apart with the pulling unit.
Figure 21 is a whole view of an embodiment of the anti-jumping upper wheel device with double dampers of the present invention, wherein the pulling pillar of the pulling unit are plugged into the plugging hole of the damper sliding unit of the anti-jumping upper wheel assembly with double dampers.
Figure 22 is a diagrammatic view of an embodiment of the anti-jumping upper wheel device with double dampers of the present invention assembled respectively on the door leaf and the upper track.

### DETAILED DESCRIPTION OF THE INVENTION

Components and parts represented by reference signs in the drawings are as follows.

Anti-jumping upper wheel assembly with double dampers 10, pulling unit 20;
upper wheel plate 11, upper wheel 12, upper wheel cover 13, damper 14, damper sliding unit 15, extension spring 16, groove for sliding 131, "+" symbol -shaped groove hole 1310, guiding groove132, bent portion 1320, assembling grooves for dampers 133,134, assembling grooves for extension spring 135, plugging hole 150, connecting unit 151, connecting holes for drawbars of dampers 1510, 1511, connecting hole for extension spring 1512, anti-jumping roller 17;
baseplate of pulling unit 21, pillar plate of pulling unit 22, pulling pillar 221, guiding unit 211, internal six angle stud 212, guiding hole 222, screw hole 223, extension part 2220, screw 224, screw 225, end on longitudinal direction 213, three longitudinal branch plates in parallel 2131, 2132, 2133, end on longitudinal direction 214, three longitudinal branch plates in parallel 2141, 2142, 2143, connecting holes a, b, c;
connecting elastic unit 24, connecting elastic unit 23, baseplate of elastic unit 231, left erect plate 232, right erect plate 233, left baseplate 2311, right baseplate 2312, middle baseplate 2313, raised heads 23110, 23120, assembly hole 23130, lug bosses 2320, 2330, door leaf of cupboard door A, upper track B.

Preferred embodiments of the present invention will be described in the following with the drawings.

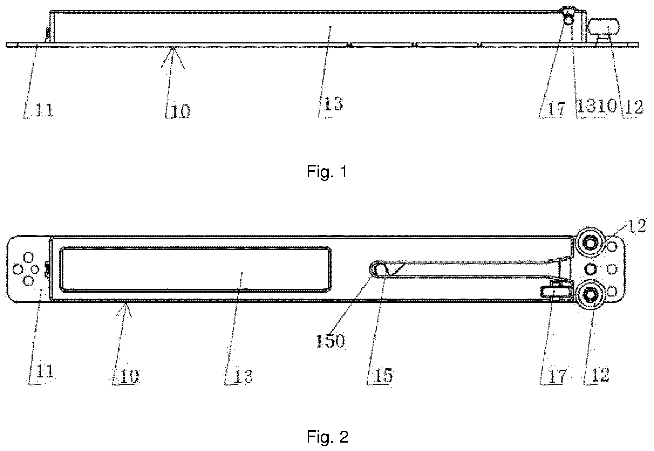

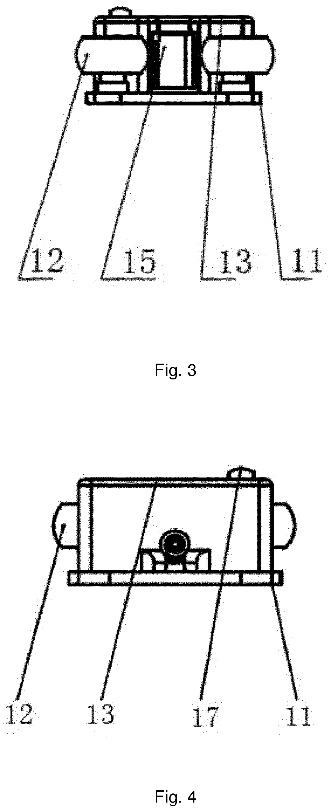

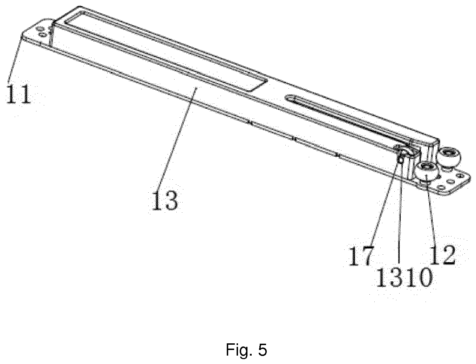

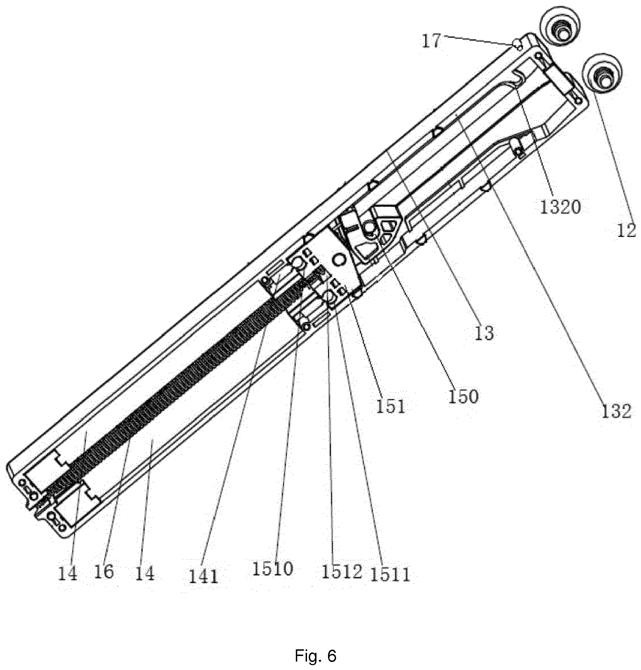

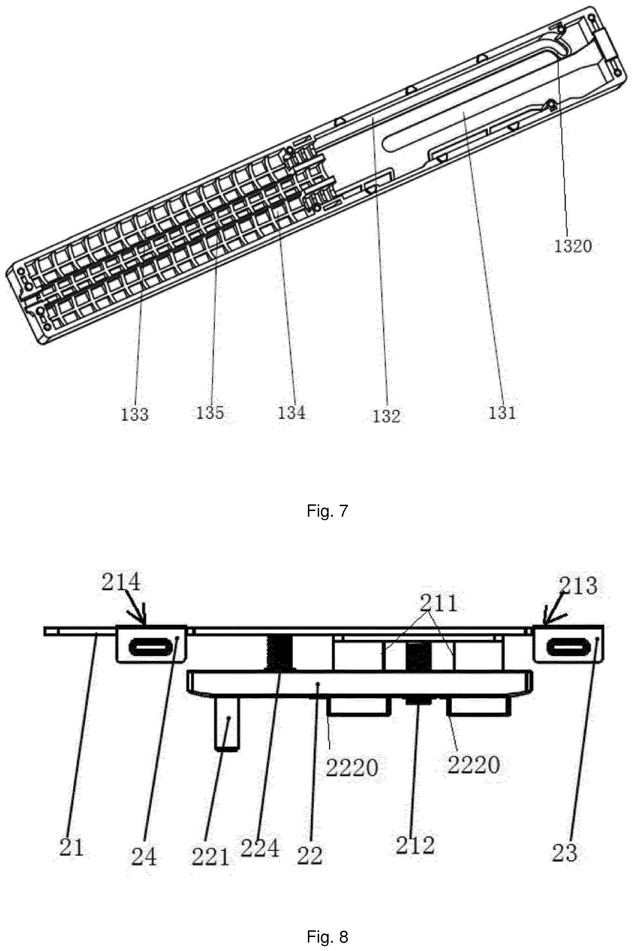

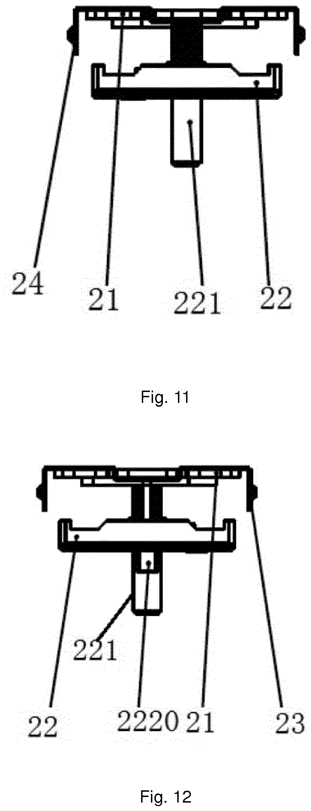

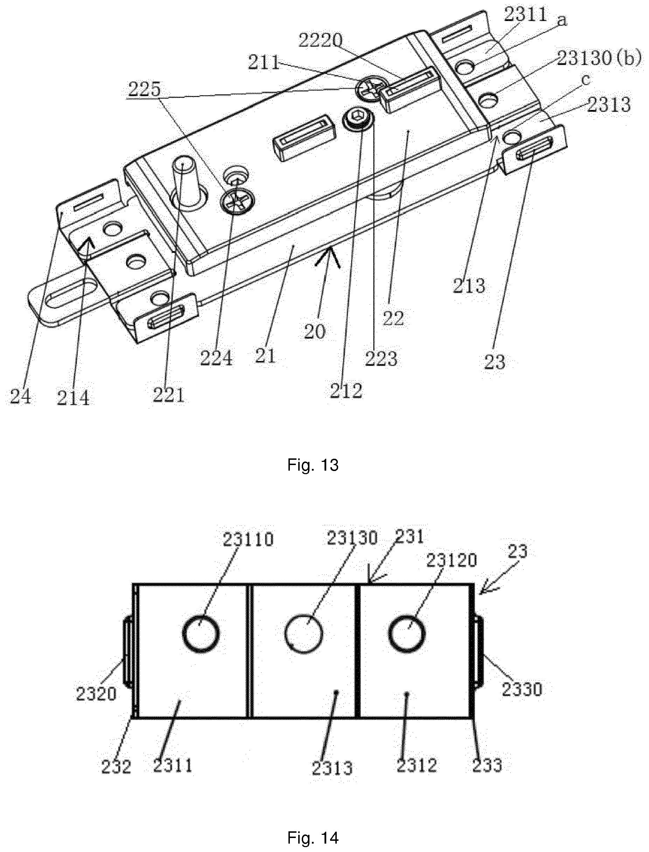

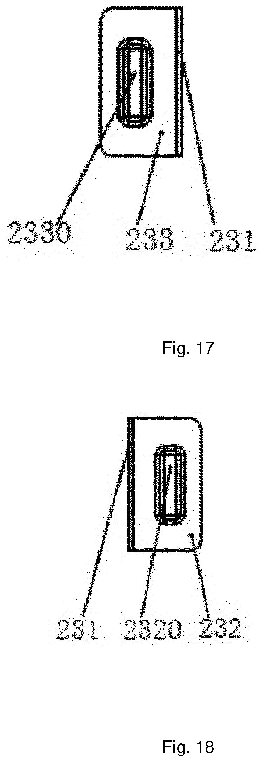

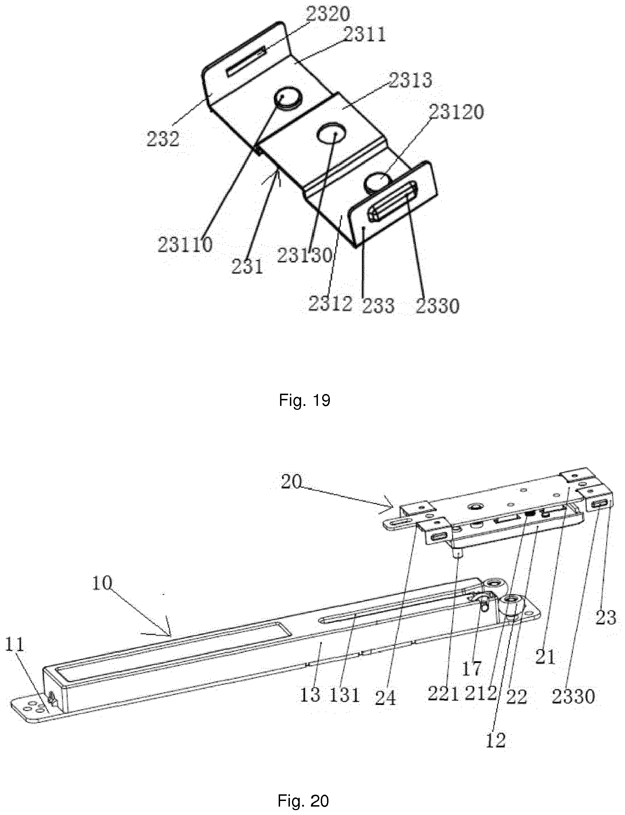

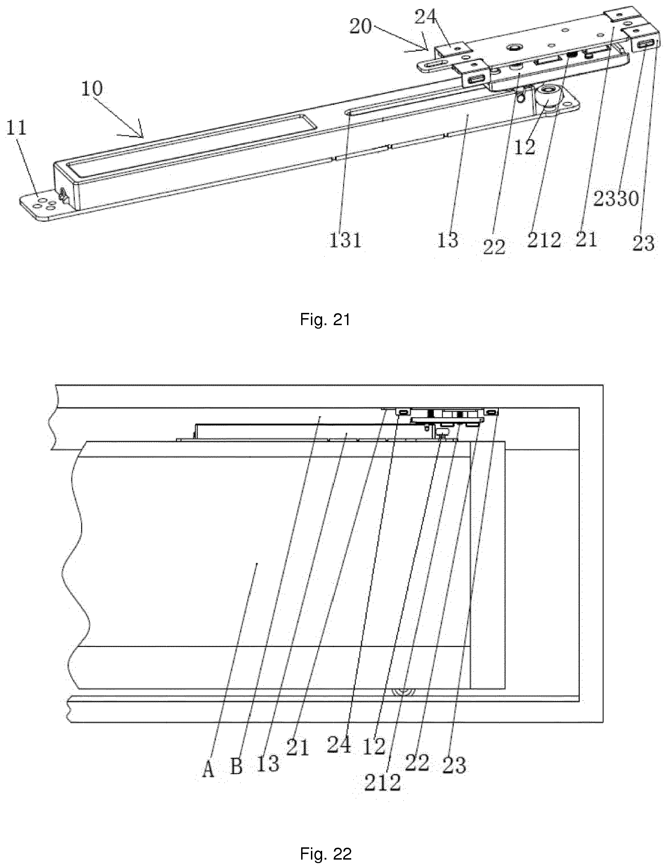

Figure 20 and figure 21 show whole views of the anti-jumping upper wheel device with double dampers of an embodiment of the present invention, which is comprised of two parts: an anti-jumping upper wheel assembly with double dampers 10 assembled at top end of the door leaf of a sliding door in use, and a pulling unit 20 assembled in the upper track in use. Figures 1 to 7 show the ant-jumping upper wheel assembly with double dampers 10 and its components, figures 8 to 13 show the pulling unit 20, and figures 14 to 19 show the connecting elastic unit 23 of the pulling unit 20. Figure 22 shows a diagrammatic view of the anti-jumping upper wheel device with double dampers being assembled to the door leaf A and the upper track B.

Next, the anti-jumping upper wheel assembly with double dampers 10 and the pulling unit 20 will be described respectively.

### (I) the anti-jumping upper wheel assembly with double dampers 10

As shown in figures 1 to 8, the anti-jumping upper wheel assembly with double dampers 10 is comprised of an upper wheel plate 11, an upper wheel 12 and an upper wheel cover 13 mounted on the upper wheel plate 11, and a damper 14 an end of which is connected to a damper sliding unit 15 is mounted on longitudinal direction in the upper wheel cover 13 on the upper wheel plate 11. When the anti-jumping upper wheel assembly with double dampers 10 is assembled on the top end of the door leaf, the upper wheel 12 can fit to and slide along the upper track in which a door leaf is assembled.

Preferably, in the present invention, two dampers 14 are mounted on longitudinal direction in parallel in the upper wheel cover 13 on the upper wheel plate 11, the damper sliding unit 15 is connected to ends of drawbars of the two dampers, and damping effect is enhanced because of these two dampers. In addition, an extension spring 16 which can also be pulled and pushed by the damper sliding unit 15 is mounted in parallel with and between two dampers 14. Damper assembling grooves 133, 134 for two dampers 14 and an extension spring assembling groove 135 for the extension spring 16 are mounted in the upper wheel cover 13. The damper sliding unit 15 is connected with a connecting unit 151 which has connecting holes for dampers' drawbars 1510,1511 and a connecting hole for extension spring 1512, ends of the drawbars of two dampers 14 and the corresponding end of the extension spring 16 are respectively connected to the connecting holes for dampers' drawbars 1510,1511 and the connecting hole for extension spring 1512, in order that the dampers 14 and the extension spring 16 can be pulled and pushed by the damper sliding unit 15.

A groove for sliding 131 is mounted in the upper cover 13 at the position corresponding to the damper sliding unit 15, the groove for sliding 131 is mounted at longitudinal middle position of the upper wheel cover 13 i.e. middle position between two dampers 14, and aligns with position of the extension spring 16.

Wherein, damper sliding unit 15 has a plugging hole 150 and a fitting pillar. Wherein, the plugging hole 150 is positioned in the groove for sliding 131, so that the pulling pillar (will be described in the following) of the pulling unit 20 can go through the groove for sliding 131 and plug into the plugging hole 150 to pull the damper sliding unit 15. A guiding groove 132 for guiding the fitting pillar is mounted to inner surface of the upper wheel cover 13, the guiding groove 132 has a bent portion 1320 at the last end which fits to the above-mentioned fitting pillar of the damper sliding unit 15, and the bent portion 1320 and the damper sliding unit 15 are proper structured in order that the fitting pillar can be fitted and locked in the bent portion 1320 when it slides into the bent portion 1320 and at which moment the extension spring 16 reaches to its maximum and the damper 14 is "strung", and the fitting pillar can get out of the bent portion 1320 when it is being pushed on reverse direction and at this moment the damper is "unhooked" and acts damping effect. The damper sliding unit should have proper structure to satisfy the above mentioned requirements of function and assembly, Chinese patent application No. CN2013265103U provides a preferred example of the damper sliding unit whose technical solution can be cited in the present invention and will not be described in detail, and the present invention of course can use other equivalent structures.

At the minute that the door leaf is being closed and open, the door leaf will jumping tempestuously because of a very strong accelerated speed brought then and a gap between the assembled door leaf and the upper track. The applicant thus provides an easy and reliable solution as follows after tests for times.

An anti-jumping roller 17 is mounted in the upper wheel cover 13, which has a horizontal axle being vertical with the direction that the door leaf (A) moves (longitudinal direction of the anti-jumping upper wheel assembly with double dampers 10), and the anti-jumping roller rotates around the fixed axle; moreover, an upper part of the anti-jumping roller 17 protrudes out of top face of the upper wheel cover. The anti-jumping roller 17 is a general rotatable wheel, and preferably a plastic wheel, the height thereof protruding out of the top face of the upper wheel cover 13 is equal to distance between the top face of upper wheel cover 13 and surface of a pillar plate of pulling unit of the pulling unit 20 which will be described in the following, the anti-jumping roller 17 rotates on the pillar plate of pulling unit along the direction that the door leaf moves and accordingly the door leaf has no space to jumping , therefore the door leaf jumpinging at the time of being opened and closed is avoid, and a very great effect is obtained with applying. As a preferred embodiment, a "+"symbol shaped groove hole 1310 is mounted to the upper wheel cover in the end to which the groove for sliding 131 is mounted, and the anti-jumping roller 17 is assembled in the "+"symbol shaped groove hole 1310.

### (II) the pulling unit 20

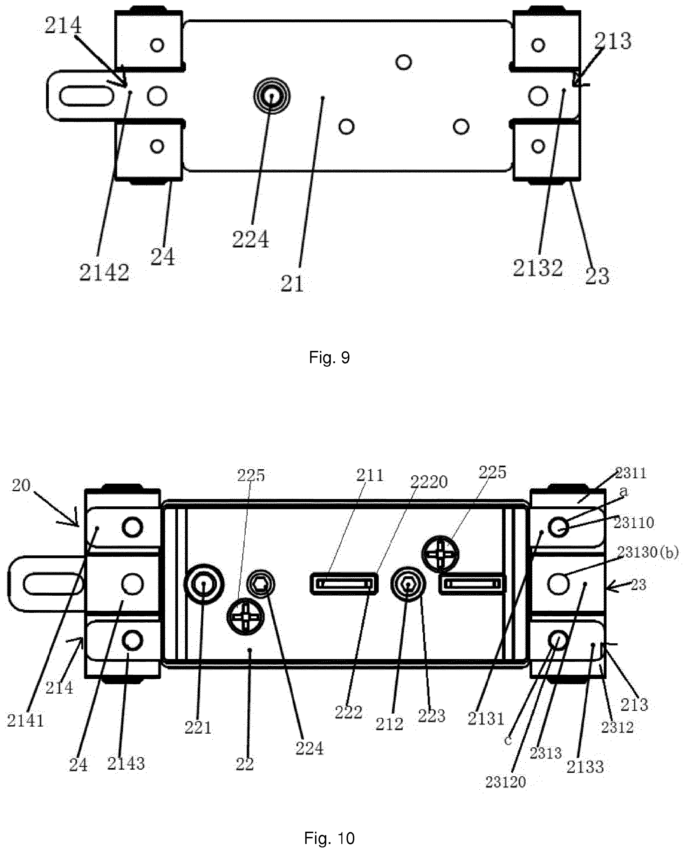

As shown in figures 9 to 14, the pulling unit 20 is a pulling unit with double plates, which is comprised of a baseplate of pulling unit 21 and a pillar plate of pulling unit 22 assembled below the baseplate of pulling unit 21; a pulling pillar 221 fitting to the plugging hole 150 of the damper sliding unit 15 is fixed vertically on the face of pillar plate of pulling unit 22.

Wherein, the pulling pillar 221 is a very important functional part, and it can be inserted into the plugging hole 150 to pull the damper sliding unit 15 and make the damper 14 "strung", can get out of the plugging hole 150 when moving on after the damper is "strung", and can force the damper sliding unit on reverse direction of sliding to make the damper act damping function. Actual length of the pulling pillar 221 is usually not the effective length plugged into the plugging hole 150 because of limit by assemble, but the structure of double plates can make the pillar plate of pulling unit 22 be closer to the top of the door leaf in order to increase the effective length of the pulling pillar while the baseplate of pulling unit 21 is assembled to the top surface of the upper track.

Preferably, vertically upright guiding units 211 and an internal six angle stud 212 in parallel therewith are fixed on the baseplate of pulling unit 21, guiding holes 222 fitting to the guiding units 221 and a screw hole 223 fitting to the internal six angle stud 212 are correspondingly mounted to the pillar plate of pulling unit 22, and the guiding units 211 and the internal six angle stud 212 go through the guiding holes 222 and the screw hole 223 respectively to protrude out of the pillar plate of pulling unit 22; more preferably, an extension part 2220 for each guiding unit 211 is mounted around the respective guiding hole 222 on the pillar plate of pulling unit 22. In the present embodiment, preferably, two guiding units 211 are mounted, and more preferably, the guiding units are cuboid; and one end of the internal six angle stud 212 is restricted in the baseplate of pulling unit 21 and can only rotate.

In addition, the pillar plate of pulling unit 22 is comprised of a plastic board and a metal baseplate overlapped both of which are fixed together by a screw marked by 224 in figures from bottom to top and a screw marked by 225 from top to bottom.

Turn around the above-mentioned internal six angle stud 212, driving it to mesh transmission with the screw hole 223, the pillar plate of pulling unit 22 thus moves upward or downward with relative to the baseplate of pulling unit 21, and the effective length of the pulling pillar 221 fixed on the pillar plate of pulling unit 22 will be elongated or shorten in order that it can fit to the damper sliding unit 15 and plug into the plugging hole 150 and therefore can pull the damper sliding unit 15 effectively to work; and whole height of the pulling unit 20 can also be adjusted to fit different assembly width.

Preferably, in order to fix the pulling unit 20 on the upper track, the end 213 on longitudinal direction of the baseplate of pulling unit 21 is cut into three longitudinal branch plates in parallel 2131, 2132, 2133, the end 214 on longitudinal direction of the baseplate of pulling unit 21 is cut into three longitudinal branch plates in parallel 2141, 2142, 2143, and a connecting hole is mounted to each branch plate of each end on longitudinal direction; a connecting elastic unit 23 and a connecting elastic unit 24 are respectively connected to the three longitudinal branch plates in parallel of both ends of the baseplate of pulling unit 21. Since structure of the end 213 on longitudinal direction and the connecting elastic unit thereon are mainly identical with that of the end 214 on longitudinal direction and the connecting elastic unit thereon, thus only take the end 213 on longitudinal direction for example to illustrate the structures next.

As shown in figures 9 to 14, three longitudinal branch plates in parallel 2131, 2132, 2133 of the end 213 on longitudinal direction of the baseplate of pulling unit 21 respectively has a connecting hole a, b, c, the connecting elastic unit 23 is connected to the three longitudinal branch plates in parallel, and the connecting elastic unit 23 is made of elastic material which is good for assembly in the upper track steadily.

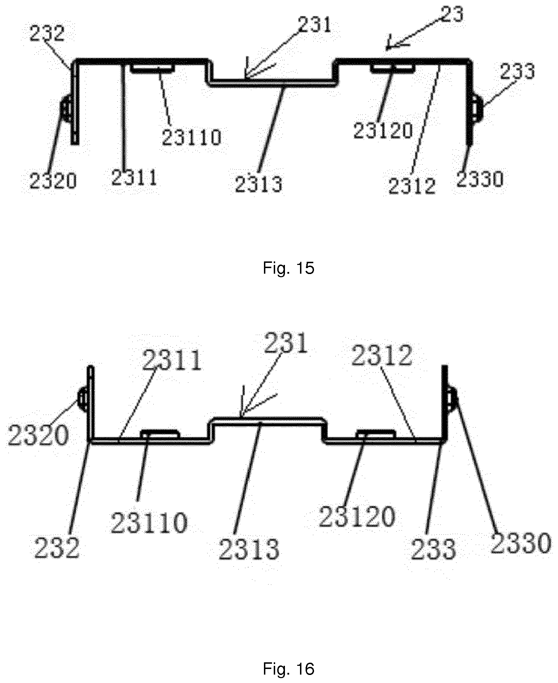

As shown in figures 15 to 20, the connecting elastic unit 23 is comprised of a baseplate of elastic unit 231, and a left erect plate 232 and a right erect plate 233 which are respectively fixed on both ends of the baseplate of elastic unit 231, the baseplate of elastic unit 231 has a left baseplate 2311 fixed with the left erect plate232, a right baseplate 2312 fixed with the right erect plate 233, and a middle baseplate 2313 mounted between the left baseplate 2311 and the right baseplate 2312. The connecting elastic unit 23 is made in a whole.

Wherein, the left baseplate 2311, the middle baseplate 2313 and the right baseplate 2312 respectively fit to the branch plates 2131, 2132, 2133 in parallel on longitudinal direction, in order that the connecting elastic unit 23 can be overlapped and connected to the baseplate of pulling unit 21; each of the left baseplate 2311, the middle baseplate 2313 and the right baseplate 2312 has an assembly hole or a raised head fitting to the connecting holes a, b, c of the corresponding branch plate.

In the present example, the left baseplate 2311 and the right baseplate 2312 are in the same plane, the middle baseplate 2313 raises from the left baseplate 2311 and the right baseplate 2312, so that the middle branch plate 2132 can fit to bottom of the middle baseplate 2313 and the branch plates 2131, 2133 in both sides can fit to top of the left baseplate 2311 and the right baseplate 2312 as connecting in parallel. The left baseplate 2311 and the right baseplate 2312 respectively have raised heads 23110, 23120 which respectively fit to and connect to the connecting holes a, c of two branch plates 2131, 2133 in both sides of the three longitudinal branch plates in parallel; the middle baseplate 2313 has an assembly hole 23130 fitting to the connecting hole b of the branch plate 2132 in the middle of the three longitudinal branch plates in parallel, and a screw passes through the assembly hole 23130 and the connecting hole b to assemble.

Of course, in the present example of the present invention, the middle baseplate can dent with relative to the left and the right baseplates, so that the branch plate in the middle can fit to top of the middle baseplate and the branch plates in two sides can respectively fit to bottom of the left and the right baseplate when connecting in parallel. In other examples of the present invention, it also can be that one of the left, the middle and the right baseplates has an assembly hole to connect with corresponding branch plate by screw and the other two of them has raised heads to connect in the connecting hole of corresponding branch plates; and the like.

In other examples of the present invention, both ends on longitudinal direction of the baseplate of pulling unit can be cut into more than three longitudinal branch plates in parallel in some situations, each of which has a connecting hole; and a connecting elastic unit is overlapped and connected in parallel to the more than three longitudinal branch plates in parallel of each end on longitudinal direction of the baseplate of pulling unit. Accordingly, elastic baseplate of the connecting elastic unit has more than three corresponding sub-plates which is same in quantity with the branch plates of corresponding end of the baseplate of pulling unit, and therein at least one sub-plate is raised or dent with relative to other sub-plates so that all the sub-plates are not in the same plane in order to achieve overlapping connection by some sub-plates fitting in top face of corresponding branch plate and other sub-plates fitting in bottom face of corresponding branch plate. Then the raised head as in the above mentioned example wedges in the connecting hole of the branch plate or the screw passes through corresponding connecting hole and assembly hole to assemble.

In addition, in the present embodiment, a lug boss 2320 and a lug boss 2330 are respectively mounted on outer surfaces of the left erect plate 232 and the right erect plate 233, vertical distance between the outer surface of the lug boss 2320 of the left erect plate and the outer surface of the lug boss 2330 of the right erect plate are identical with vertical width of the upper track. Preferably, both lug bosses are cuboid. For assembling, the pulling unit with double plates 20 are assembled upside down in the upper track with the baseplate of elastic unit 231 pressing against bottom of the upper track, and the lug bosses 2320, 2330 mentioned above respectively press against left and right sides of the upper track so that the pulling unit can be moved easily because of the structure of lug boss in need of adjusting position of the pulling unit 20 in the upper track.

Method to assemble the pulling unit with double plates in the upper track will be introduced next. First, mount the pulling unit with double plates 20 far from side of the door frame as possible when assembling the pulling unit with double plates 20 upside down in the upper track B, as final position thereof is not confirmed now. The pulling pillar 221 of the pulling unit with double plates 20 does not contact the damper sliding unit 15 of the anti-jumping upper wheel assembly with double dampers 10 when the door leaf A is being pulled from side to middle of the door frame, and then when the door leaf A is moved on from middle to the other side of the door frame the damper sliding unit 15 of the upper wheel assembly with double dampers 10 will contact the pulling pillar 221 and pull the pulling unit with double plates 20 toward the side of the door frame until reach it, and the pulling unit with double plates 20 is located voluntarily at this position. Then we can screw the internal six angle stud 212 by six angle screwdriver to press the internal six angle stud 212 against top of the upper track and thus fix the pulling unit with double plates 20.

Action mechanism of the anti-jumping upper wheel device with double dampers of the present invention will be introduced next.

Referring to figure 22, when the door leaf A is at side of the door frame, the pulling pillar 22 of the pulling unit with double plates 20 in the upper track B is plugged in the plugging hole 150 of the damper sliding unit 15 of the upper wheel assembly with double dampers 10, when the door leaf A is being pulled from right to left the pulling pillar 221 pulls the damper sliding unit 15 to make the damper "strung" and then the door leaf A moves on to left, the pulling pillar 221 get out of the damper sliding unit 15 and the door leaf A slides free. When the door leaf A is being pushed from left to right as it is being closed, the pulling pillar 221 collides with the damper sliding unit 15 and makes the damper sliding unit 15 "unhooked" when the upper wheel assembly with double dampers 10 slides to below of the pulling unit with double plates 20, and at this time the dampers of the upper wheel assembly with double dampers 10 functions to force the door leaf on reverse direction, the door leaf A will thus move smoothly without jumpinging and collision to reach edge of the door frame safely.

Advantages of the anti-jumping upper wheel device with double dampers of the present example are as follows: (i) it is novel in design and is proper structured; (ii) height of the pulling pillar can be adjusted; (iii) it can be assembled easily: because the connecting elastic unit is mounted at both sides of the baseplate of pulling unit of the pulling unit with double plates, which is made of material with high elasticity and which has cuboid lug bosses on the left and the right erect plates, the pulling unit with double plates thus can be assembled in the upper track with the connecting elastic unit pressing against both inner surface of the upper track steadily without falling off, and can also be pulled and pushed to move in the upper track; (iv) position of the pulling unit with double plates can be located voluntarily without manual work because of the improved structure of the baseplate of pulling unit; and (v) the anti-jumping upper wheel with double dampers has function of damping and anti-jumpinging .

The above mentioned is only preferred examples of the present invention, of course can not limit protection coverage of the present invention, and any equivalent transformation and substitution of the technical solution of the present invention is in the protection coverage of the present invention.

## Claims

1. An anti-jumping upper wheel device with double dampers comprising an anti-jumping upper wheel assembly with double dampers (10) which is comprised of an upper wheel plate (11), an upper wheel (12) and an upper wheel cover (13) mounted on said upper wheel plate (11), dampers (14) connected to a damper sliding unit (15) at an end being mounted on longitudinal direction in said upper wheel cover (13) on said upper wheel plate (11), and a pulling unit (20) which can be assembled into an upper track (B) that a door leaf (A) is assembled in and can pull said damper sliding unit (15), wherein,
an anti-jumping roller (17) is mounted to said upper wheel cover (13), which has a fixed horizontal axle being vertical with the direction that the door leaf (A) moves, and upper part of which protruding out of top face of said upper wheel cover (13);
said pulling unit (20) is a pulling unit with double plates, which is comprised of a baseplate of pulling unit (21) and a pillar plate of pulling unit (22) mounted above it; a pulling pillar (221) which can pull said damper sliding unit (15) is fixed vertically on said pillar plate of pulling unit (22);
each of both ends on longitudinal direction (213, 214) of said baseplate of pulling unit (21) is cut into a plurality of longitudinal branch plates in parallel (2131, 2132, 2133, 2141, 2142, 2143) each of which has a connecting hole (a, b, c), and a connecting elastic unit (23, 24) is connected in parallel to said a plurality of longitudinal branch plates in parallel (2131, 2132, 2133, 2141, 2142, 2143) at each end on longitudinal direction (213, 214) of said baseplate of pulling unit (21);
said connecting elastic unit (23, 24) is comprised of a baseplate of elastic unit (231), a left erect plate (232) and a right erect plate (233) which are respectively fixed on both ends of said baseplate of elastic unit (231), said baseplate of elastic unit (231) having a plurality of sub-plates (2311, 2312, 2313) which are same in quantity with said branch plates (2131, 2132, 2133, 2141, 2142, 2143) at corresponding ends of said baseplate of pulling unit (21), and at least one of said sub-plates is raised or dent with relative to other sub-plates so that all said sub-plates are not in the same plane in order to achieve overlapping connection by some sub-plates fitting in top face of corresponding branch plates (2131, 2132, 2133, 2141, 2142, 2143) and other sub-plates fitting in bottom face of corresponding branch plates (2131, 2132, 2133, 2141, 2142, 2143); said a plurality of sub-plates (2311, 2312, 2313) respectively fitting to said a plurality of longitudinal branch plates in parallel (2131, 2132, 2133, 2141, 2142, 2143) so that said connecting elastic unit (23, 24) can be connected to said baseplate of pulling unit (21); said sub-plates have assembly holes or raised heads (23110, 23120, 23130) fitting to said connecting holes (a, b, c) of said branch plates (2131, 2132, 2133, 2141, 2142, 2143);
lug bosses (2320, 2330) are respectively mounted on outer surfaces of said left erect plate (232) and said right erect plate (233), and vertical distance between outer surface of said lug bosses (2320, 2330) of said left erect plate (232) and outer surface of said right erect plate (233) is identical with vertical width of said upper track (B).

2. An anti-jumping upper wheel device with double dampers of Claim 1, wherein each of both ends on longitudinal direction (213, 214) of said baseplate of pulling unit (21) is cut into three longitudinal branch plates in parallel (2131, 2132, 2133, 2141, 2142, 2143), and said baseplate of elastic unit (231) of said connecting elastic unit (23, 24) is comprised of three sub-plates which are a left baseplate (2311) fixed to said left erect plate (232), a right baseplate (2312) fixed to said right erect plate (233) and a middle baseplate (2313) fixed between said left baseplate (2311) and said right baseplate (2312).

3. An anti-jumping upper wheel device with double dampers of Claim 2, wherein said left baseplate (2311) is in the same plane with said right baseplate (2312), said middle baseplate (2313) is raised with respect to said left baseplate (2311) and said right baseplate (2312) in order that said branch plate in the middle (2132) can fit to bottom of said middle baseplate (2313) and said branch plate at both sides (2131, 2133) can respectively fit to top of said left baseplate (2311) and said right baseplate (2312).

4. An anti-jumping upper wheel device with double dampers of Claim 3, wherein two raised heads (23110, 23120) are respectively mounted on said left baseplate (2311) and said right baseplate (2312), said raised heads (23110, 23120) respectively fit to and connect to said connecting holes (a, c) in two of said three longitudinal perpendicular branch plates (2131, 2132, 2133, 2141, 2142, 2143) at sides, an assembly hole (23130) is mounted to said middle baseplate (2313) to fit to said connecting hole (b) in one of said three longitudinal perpendicular branch plates (2131, 2132, 2133, 2141, 2142, 2143) in the middle, and a screw goes through said assembly hole (23130) and said connecting hole (b) to assemble.

5. An anti-jumping upper wheel device with double dampers of Claim 1, wherein a vertically upright guiding unit (211) and an internal six angle stud (212) in parallel therewith are fixed on said baseplate of pulling unit (21), a guiding hole (222) fitting to said guiding unit (211) and a screw hole (223) fitting to said internal six angle stud (212) are correspondingly mounted to said pillar plate of pulling unit (22), said guiding unit (211) and said internal six angle stud (212) go through said guiding hole (222) and said screw hole (223) respectively, and distance between said pillar plate of pulling unit (22) and said baseplate of pulling unit (21) can be adjusted by rotating said internal six angle stud (212).

6. An anti-jumping upper wheel device with double dampers of Claim 1, wherein said lug boss (2320, 2330) is in cuboid.

7. An anti-jumping upper wheel device with double dampers of Claim 1, wherein a "+"symbol-shaped groove hole (1310) is mounted to said upper wheel cover (13) at the end to which a groove for sliding (131) is mounted, and said anti-jumping roller (17) is assembled in said "+"symbol shaped groove hole (1310).

8. An anti-jumping upper wheel device with double dampers of Claim 1, wherein two dampers (14) are mounted in parallel on longitudinal direction in said upper wheel cover (13) on said upper wheel plate (11), and heads of drawbars of said two dampers (14) are connected to said damper sliding unit (15); said damper sliding unit (15) has a plugging hole (150) fitting to said pulling unit (20), a groove for sliding (131) corresponding to said damper sliding unit (15) is mounted to said upper wheel cover (13), said plugging hole (150) is positioned in said groove for sliding (131), and said pulling unit (20) can go through said groove for sliding (131) and plug into said plugging hole (150).

9. An anti-jumping upper wheel device with double dampers of Claim 8, wherein an extension spring (16) is mounted in parallel with and between said two dampers (14), a connecting unit (151) is connected to said damper sliding unit (15), and said heads of drawbars of said dampers (14) and the corresponding head of said extension spring (16) are connected to said connecting unit (151).

10. An anti-jumping upper wheel device with double dampers of Claim 9, wherein said damper sliding unit (15) has a fitting pillar, a guiding groove (132) used for guiding said fitting pillar is mounted to inner surface of said upper wheel cover (13), said guiding groove (132) has a bent portion (1320) at an end, and said bent portion (1320) and said damper sliding unit (15) are proper structured in order that said fitting pillar can fit to said bent portion (1320) as sliding into said bent portion (1320) and can get out as sliding to opposite direction.

## Patentansprüche

1. Obere Antirückprall-Radvorrichtung mit Doppeldämpfer, umfassend einen oberen Antirückprall-Radaufbau mit einem Doppeldämpfer (10), der aus einer Platte (11) des oberen Rads, einem oberen Rad (12) und einer Abdeckung (13) des oberen Rads, die an der Platte (11) des oberen Rads angebracht ist, Dämpfern (14), die mit einer Dämpfergleiteinheit (15) verbunden sind und an einem Ende in der Längsrichtung in der Abdeckung (13) des oberen Rads an der Platte (11) des oberen Rads angebracht sind, und einer Zugeinheit (20), die in eine in einem Türblatt (A) montierte obere Schiene (B) eingebaut werden kann und die Dämpfergleiteinheit (15) ziehen kann, besteht, wobei
eine Antirückprallrolle (17) an der Abdeckung (13) des oberen Rads angebracht ist, die eine feste waagerechte Achse, welche senkrecht zu der Richtung der Bewegung des Türblatts (A) verläuft, aufweist und deren oberer Teil aus der oberen Fläche der Abdeckung (13) des oberen Rads ragt;
wobei die Zugeinheit (20) eine Zugeinheit mit zwei Platten ist, die aus einer Basisplatte (21) der Zugeinheit und einer darüber angebrachten Säulenplatte (22) der Zugeinheit besteht; wobei eine Zugsäule (221), die die Dämpfergleiteinheit (15) ziehen kann, senkrecht an der Säulenplatte (2) der Zugeinheit fixiert ist;
wobei jedes der beiden Enden (213, 214) in der Längsrichtung der Basisplatte (21) der Zugeinheit in mehrere längsgerichtete parallele Zweigplatten (2131, 2132, 2133, 2141, 2142, 2143) geschnitten ist, die jeweils eine Verbindungsöffnung (a, b, c) aufweisen, und eine verbindende elastische Einheit (23, 24) parallel mit den mehreren längsgerichteten parallelen Zweigplatten (2131, 2132, 2133, 2141, 2142, 2143) an jedem Ende (213, 214) in der Längsrichtung der Basisplatte (21) der Zugeinheit verbunden ist;
wobei die verbindende elastische Einheit (23, 24) aus einer Basisplatte (231) der elastischen Einheit, einer linken hochstehenden Platte (232) und einer rechten hochstehenden Platte (233), die jeweils an beiden Enden der Basisplatte (231) der elastischen Einheit fixiert sind, besteht, wobei die Basisplatte (231) der elastischen Einheit mehrere Unterplatten (2311, 2312, 2313) aufweist, deren Anzahl jener der Zweigplatten (2131, 2132, 2133, 2141, 2142, 2143) an entsprechenden Enden der Basisplatte (21) der Zugeinheit gleich ist, und wenigstens eine Unterplatte in Bezug auf andere Unterplatten erhöht oder eingedrückt ist, so dass sich nicht alle Unterplatten in der gleichen Ebene befinden, um eine überlappende Verbindung zu erzielen, indem einige Unterplatten an der oberen Fläche von entsprechenden Zweigplatten (2131, 2132, 2133, 2141, 2142, 2143) sitzen und andere Unterplatten an der unteren Fläche von entsprechenden Zweigplatten (2131, 2132, 2133, 2141, 2142, 2143) sitzen;
wobei die mehreren Unterplatten (2311, 2312, 2313) jeweils so an den längsgerichteten parallelen Zweigplatten (2131, 2132, 2133, 2141, 2142, 2143) sitzen, dass die verbindende elastische Einheit (23, 24) mit der Basisplatte (21) der Zugeinheit verbunden werden kann; wobei die Unterplatten Montagelöcher oder erhöhte Köpfe (23110, 23120, 23130) aufweisen, die an den Verbindungslöchern (a, b, c) der Zweigplatten (2131, 2132, 2133, 2141, 2142, 2143) sitzen;
wobei Ansatzerhebungen (2320, 2330) jeweils an Außenflächen der linken hochstehenden Platte (232) und der rechten hochstehenden Platte (233) angebracht sind und der senkrechte Abstand zwischen den Außenflächen der Ansatzerhebungen (2320, 2330) der linken hochstehenden Platte (232) und der rechten hochstehenden Platte (233) mit der senkrechten Breite der oberen Schiene (B) identisch ist.

2. Obere Antirückprall-Radvorrichtung mit Doppeldämpfer nach Anspruch 1,
wobei jedes der beiden Enden (213, 214) in der Längsrichtung der Basisplatte (21) der Zugeinheit in drei längsgerichtete parallele Zweigplatten (2131, 2132, 2133, 2141, 2142, 2143) geschnitten ist, und die Basisplatte (231) der elastischen Einheit der verbindenden elastischen Einheit (23, 24) aus drei Unterplatten besteht, bei denen es sich um eine linke Basisplatte (2311), die an der linken hochstehenden Platte (232) fixiert ist, eine rechte Basisplatte (2312), die an der rechten hochstehenden Platte (233) fixiert ist, und einer mittleren Basisplate (2313), die zwischen der linken Basisplatte (2311) und der rechten Basisplatte (2312) fixiert ist, handelt.

3. Obere Antirückprall-Radvorrichtung mit Doppeldämpfer nach Anspruch 2,
wobei sich die linke Basisplatte (2311) in der gleichen Ebene wie die rechte Basisplatte (2312) befindet, und die mittlere Basisplatte (2313) in Bezug auf die linke Basisplatte (2311) und die rechte Basisplatte (2312) erhöht ist, damit die Zweigplatte (2132) in der Mitte an der Unterseite der mittleren Basisplatte (2313) sitzen kann und die Zweigplatten (2131, 2133) an den beiden Seiten jeweils an der Oberseite der linken Basisplatte (2311) und der rechten Basisplatte (2312) sitzen können.

4. Obere Antirückprall-Radvorrichtung mit Doppeldämpfer nach Anspruch 3,
wobei zwei erhöhte Köpfe (23110, 23120) jeweils an der linken Basisplatte (2311) und der rechten Basisplatte (2312) angebracht sind, wobei sich die beiden erhöhten Köpfe (23110, 23120) jeweils in die Verbindungslöchern (a, c) in zwei der drei längsgerichteten perpendikularen Zweigplatten (2131, 2132, 2133, 2141, 2142, 2143) an Seiten setzen und sich damit verbinden, wobei an der mittleren Basisplatte (2313) eine Montageöffnung (23130) so ausgeführt ist, dass sie an dem Verbindungsloch (b) in einer der drei längsgerichteten perpendikularen Zweigplatten (2131, 2132, 2133, 2141, 2142, 2143) in der Mitte sitzt, und eine Schraube durch die Montageöffnung (23130) und das Verbindungsloch (b) verläuft, um den Zusammenbau vorzunehmen.

5. Obere Antirückprall-Radvorrichtung mit Doppeldämpfer nach Anspruch 1,
wobei eine senkrecht aufrechtstehende Führungseinheit (211) und ein dazu paralleler Innensechskantbolzen (212) an der Basisplatte (21) der Zugeinheit (21) fixiert sind, eine zu der Führungseinheit (222) passende Führungsöffnung (222) und ein zu dem Innensechskantbolzen (212) passendes Schraubenloch (223) entsprechend an der Säulenplatte (22) der Zugeinheit angebracht sind, die Führungseinheit (211) und der Innensechskantbolzen (212) jeweils durch die Führungsöffnung (222) und das Schraubenloch (223) verlaufen, und der Abstand zwischen der Säulenplatte (22) der Zugeinheit und der Basisplatte (21) der Zugeinheit durch Drehen des Innensechskantbolzens (212) reguliert werden kann.

6. Obere Antirückprall-Radvorrichtung mit Doppeldämpfer nach Anspruch 1,
wobei die Ansatzerhebung (2320, 2330) quaderförmig ist.

7. Obere Antirückprall-Radvorrichtung mit Doppeldämpfer nach Anspruch 1,
wobei ein "+"-förmiges Schlitzloch (1310) an jenem Ende, an dem eine Nut (131) zum Gleiten angebracht ist, an der Abdeckung (13) des oberen Rads ausgeführt ist, und die Antirückprallrolle (17) in dem "+"-förmigen Schlitzloch (1310) montiert ist.

8. Obere Antirückprall-Radvorrichtung mit Doppeldämpfer nach Anspruch 1,
wobei zwei Dämpfer (14) parallel in der Längsrichtung in der Abdeckung (13) des oberen Rads an der Platte (11) des oberen Rads angebracht sind, und Köpfe von Zugstangen der beiden Dämpfer (14) mit der Dämpfergleiteinheit (15) verbunden sind; wobei die Dämpfergleiteinheit (15) eine zu der Zugeinheit (20) passende Stecköffnung (150) aufweist, an der Abdeckung (13) des oberen Rads eine Nut (131) zum Gleiten, die der Dämpfergleiteinheit (15) entspricht, angebracht ist, die Stecköffnung (150) in der Nut (131) zum Gleiten positioniert ist, und die Zugeinheit (20) durch die Nut (131) zum Gleiten verlaufen und sich in die Stecköffnung (150) setzen kann.

9. Obere Antirückprall-Radvorrichtung mit Doppeldämpfer nach Anspruch 8,
wobei eine Zugfeder (16) zwischen den beiden Dämpfern (14) und parallel dazu angebracht ist, eine Verbindungseinheit (151) mit der Dämpfergleiteinheit (15) verbunden ist, und die Köpfe von Zugstangen der Dämpfer (14) und der entsprechende Kopf der Zugfeder (16) mit der Verbindungseinheit (151) verbunden sind.

10. Obere Antirückprall-Radvorrichtung mit Doppeldämpfer nach Anspruch 9,
wobei die Dämpfergleiteinheit (15) eine Passsäule aufweist, eine Führungsnut (132), die zum Führen der Passsäule verwendet wird, an der Innenfläche der Abdeckung (13) des oberen Rads angebracht ist, die Führungsnut (132) an einem Ende einen gebogenen Abschnitt (1320) aufweist, und der gebogene Abschnitt (1320) und die Dämpfergleiteinheit (15) passend aufgebaut sind, damit sich die Passsäule beim Gleiten in den gebogenen Abschnitt (1320) in den gebogenen Abschnitt (1320) setzen kann und beim Gleiten in die entgegengesetzte Richtung daraus heraus gelangen kann.

## Revendications

1. Dispositif de roue supérieure anti-rebondissement avec des amortisseurs doubles, comprenant un ensemble de roue supérieure anti-rebondissement avec des amortisseurs doubles (10) qui est formé par une plaque de roue supérieure (11), une roue supérieure (12) et un recouvrement de roue supérieure (13) montés sur ladite plaque de roue supérieure (11), des amortisseurs (14) reliés à une unité de coulissement d'amortisseurs (15) montés à une extrémité dans une direction longitudinale dans ledit recouvrement de roue supérieure (13) sur ladite plaque de roue supérieure (11), et une unité de tirage (20) pouvant être assemblée dans un rail supérieur (B) dans lequel un vantail de porte (A) est assemblé et pouvant tirer ladite unité de coulissement d'amortisseurs (15), dans lequel
un rouleau anti-rebondissement (17) est monté sur ledit recouvrement de roue supérieure (13), lequel a un axe horizontal fixe qui est vertical par rapport à la direction dans laquelle le vantail de porte (A) se déplace, et dont une partie supérieure dépasse d'une face supérieure dudit recouvrement de roue supérieure (13) ;
ladite unité de tirage (20) étant une unité de tirage avec des plaques doubles, laquelle est formée par une plaque de base d'unité de tirage (21) et une plaque à pilier d'unité de tirage (22) montée au-dessus d'elle ; un pilier de tirage (221) pouvant tirer ladite unité de coulissement à amortisseurs (15) étant fixé verticalement sur ladite plaque à pilier d'unité de tirage (22) ;
chacune des deux extrémités dans la direction longitudinale (213, 214) de ladite plaque de base d'unité de tirage (21) étant coupée en une pluralité de plaques de ramification longitudinales en parallèle (2131, 2132, 2141, 2142, 2143) dont chacune a un trou de liaison (a, b, c), et une unité élastique de liaison (23, 24) étant reliée en parallèle à ladite pluralité de plaques de ramification longitudinales en parallèle (2131, 2132, 2133, 2141, 2142, 2143) à chaque extrémité dans la direction longitudinale (213, 214) de ladite plaque de base d'unité de tirage (21) ;
ladite unité élastique de liaison (23, 24) étant formée par une plaque de base d'unité élastique (231), une plaque érigée de gauche (232) et une plaque érigée de droite (233) qui sont respectivement fixées aux deux extrémités de ladite plaque de base d'unité élastique (231), ladite plaque de base d'unité élastique (231) ayant une pluralité de sous-plaques (2311, 2312, 2313) qui sont d'une même quantité que lesdites plaques de ramification (2131, 2132, 2133, 2141, 2142, 2143) à des extrémités correspondantes de ladite plaque de base d'unité de tirage (21), et au moins l'une desdites sous-plaques étant surélevée ou bosselée par rapport à d'autres sous-plaques de manière à ce que toutes lesdites sous-plaques ne soient pas dans le même plan afin d'obtenir une liaison de superposition par certaines sous-plaques s'adaptant dans la face supérieure de plaques de ramification (2131, 2132, 2133, 2141, 2142, 2143) correspondantes et d'autres sous-plaques s'adaptant dans la face inférieure de plaques de ramification (2131, 2132, 2133, 2141, 2142, 2143) correspondantes ;
ladite pluralité de sous-plaques (2311, 2312, 2313) s'adaptant respectivement à ladite pluralité de plaques de ramification longitudinales en parallèle (2131, 2132, 2133, 2141, 2142, 2143) de sorte que ladite unité élastique de liaison (23, 24) puisse être reliée à ladite plaque de base d'unité de tirage (21) ; lesdites sous-plaques ayant des trous d'assemblage ou des têtes surélevées (23110, 23120, 23130) s'adaptant auxdits trous de liaison (a, b, c) desdites plaques de ramification (2131, 2132, 2133, 2141, 2142, 2143) ;
des bossages de projection (2320, 2330) étant respectivement montés sur des surfaces extérieures de ladite plaque érigée de gauche (232) et ladite plaque érigée de droite (233), et une distance verticale entre la surface extérieure desdits bossages de projection (2320, 2330) de ladite plaque érigée de gauche (232) et la surface extérieure de ladite plaque érigée de droite (233) étant identique à la largeur verticale dudit rail supérieur (B).

2. Dispositif de roue supérieure anti-rebondissement avec des amortisseurs doubles selon la revendication 1, dans lequel chacune des deux extrémités dans la direction longitudinale (213, 214) de ladite plaque de base d'unité de tirage (21) est coupée en trois plaques de ramification longitudinales en parallèle (2131, 2132, 2133, 2141, 2142, 2143), et ladite plaque de base d'unité élastique (231) de ladite unité élastique de liaison (23, 24) étant formée par trois sous-plaques qui sont une plaque de base de gauche (2311) fixée à ladite plaque érigée de gauche (232), une plaque de base de droite (2312) fixée à ladite plaque érigée de droite (233) et une plaque de base du milieu (2313) fixée entre ladite plaque de base de gauche (2311) et ladite plaque de base de droite (2312).

3. Dispositif de roue supérieure anti-rebondissement avec des amortisseurs doubles selon la revendication 2, dans lequel ladite plaque de base de gauche (2311) est dans le même plan avec ladite plaque de base de droite (2312), ladite plaque de base du milieu (2313) étant surélevée par rapport à ladite plaque de base de gauche (2311) et ladite plaque de base de droite (2312) afin que ladite plaque de ramification au milieu (2132) puisse s'adapter au bas de ladite plaque de base du milieu (2313) et que lesdites plaques de ramification (2131, 2133) des deux côtés puissent respectivement s'adapter au haut de ladite plaque de base de gauche (2311) et ladite plaque de base de droite (2312).

4. Dispositif de roue supérieure anti-rebondissement avec des amortisseurs doubles selon la revendication 3, dans lequel deux têtes surélevées (23110, 23120) sont respectivement montées sur ladite plaque de base de gauche (2311) et ladite plaque de base de droite (2312), lesdites têtes surélevées (23110, 23120) s'adaptant respectivement auxdits trous de liaison (a, c), et étant en reliées à ceux-ci, dans deux desdites trois plaques de ramification perpendiculaires longitudinales (2131, 2132, 2133, 2141, 2142, 2143) sur des côtés, un trou d'assemblage (23130) étant ménagé sur ladite plaque de base du milieu (2313) pour s'adapter audit trou de liaison (b) dans l'une desdites trois plaques de ramification perpendiculaires longitudinales (2131, 2132, 2133, 2141, 2142, 2143) au milieu, et une vis passant à travers ledit trou d'assemblage (23130) et ledit trou de liaison (b) pour l'assemblage.

5. Dispositif de roue supérieure anti-rebondissement avec des amortisseurs doubles selon la revendication 1, dans lequel une unité de guidage dressée verticalement (211) et un tenon interne à six angles (212) en parallèle avec celle-ci sont fixés sur ladite plaque de base d'unité de tirage (21), un trou de guidage (222) d'adaptant à ladite unité de guidage (211) et un trou de vis (223) s'adaptant audit tenon interne à six angles (212) étant ménagés de manière correspondante sur ladite plaque à pilier d'unité de tirage (22), ladite unité de guidage (211) et ledit tenon interne à six angles (212) passant respectivement à travers ledit trou de guidage (22) et ledit trou de vis (223), et une distance entre ladite plaque à pilier d'unité de tirage (22) et ladite plaque de base d'unité de tirage (21) pouvant être ajustée par rotation dudit tenon interne à six angles (212).

6. Dispositif de roue supérieure anti-rebondissement avec des amortisseurs doubles selon la revendication 1, dans lequel ledit bossage de projection (2320, 2330) est cuboïde.

7. Dispositif de roue supérieure anti-rebondissement avec des amortisseurs doubles selon la revendication 1, dans lequel un trou en fente en forme de symbole « + » (1310) est ménagé sur ledit recouvrement de roue supérieure (13) à l'extrémité duquel une rainure pour le coulissement (131) est ménagée, et ledit rouleau anti-rebondissement (17) étant assemblé dans ledit trou en fente en forme de symbole « + » (1310).

8. Dispositif de roue supérieure anti-rebondissement avec des amortisseurs doubles selon la revendication 1, dans lequel deux amortisseurs (14) sont montés en parallèle dans la direction longitudinale dans ledit recouvrement de roue supérieure (13) sur ladite plaque de roue supérieure (11), et des têtes de barres de traction desdits deux amortisseurs (14) étant reliées à ladite unité de coulissement d'amortisseurs (15) ; ladite unité de coulissement d'amortisseurs (15) ayant un trou d'insertion (150) s'adaptant à ladite unité de tirage (20), une rainure pour le coulissement (131) correspondant à ladite unité de coulissement d'amortisseurs (15) étant ménagée sur ledit recouvrement de roue supérieure (13), ledit trou d'insertion (150) étant positionné dans ladite rainure pour le coulissement (131), et ladite unité de tirage (20) pouvant passer via ladite rainure pour le coulissement (131) et s'insérer dans ledit trou d'insertion (150).

9. Dispositif de roue supérieure anti-rebondissement avec des amortisseurs doubles selon la revendication 8, dans lequel un ressort d'extension (16) est monté en parallèle avec lesdits deux amortisseurs (14) et entre ceux-ci, une unité de raccordement (151) étant reliée à ladite unité de coulissement d'amortisseurs (15), et lesdites têtes de barres de traction desdits amortisseurs (14) et la tête correspondante dudit ressort d'extension (16) étant reliées à ladite unité de raccordement (151).

10. Dispositif de roue supérieure anti-rebondissement avec des amortisseurs doubles selon la revendication 9, dans lequel ladite unité de coulissement d'amortisseurs (15) a un pilier d'adaptation, une rainure de guidage (132) utilisée pour guider ledit pilier d'adaptation étant ménagée dans la surface interne dudit recouvrement de roue supérieure (13), ladite rainure de guidage (132) ayant une partie pliée (1320) à une extrémité, et ladite partie pliée (1320) et ladite unité de coulissement d'amortisseurs (15) étant structurées de manière adéquate afin que ledit pilier d'adaptation puisse s'adapter à ladite partie pliée (1320) en coulissant dans ladite partie pliée (1320) et puisse sortir en coulissant dans la direction opposée.
